# FASCICULE DE BREVET EUROPEEN

(11) **EP 2 105 375 B1**
(45) Date de publication et mention de la délivrance du brevet: **16.07.2014**
(21) Numéro de dépôt: 09153696.1
(22) Date de dépôt: 26.02.2009
(51) Int. Cl.: B62D 25/08, B62D 21/15

(54) **Traverse inférieure de baie perfectionnée pour protéger les occupants du véhicule en cas de choc frontal**
Verbesserter unterer Windschutzscheiben-Querträger zum Schutz der Fahrzeuginsassen im Fall eines Frontalaufpralles
Improved lower windscreen transverse member for protecting the occupants of a vehicle in the event of a frontal impact

(30) Priorité: 26.03.2008 FR 0851925
(43) Date de publication de la demande: 30.09.2009
(73) Titulaire: Peugeot Citroën Automobiles SA, 78140 Vélizy Villacoublay (FR)
(72) Inventeur: Binac, Jean Nicolas, 92400 Courbevoie (FR); Breton, Clément, 13100 Aix en Provence (FR)
(74) Mandataire: Fernandez, Francis Lionel

(56) Documents cités:
- EP-A- 1 184 262
- EP-A- 1 840 004
- JP-A- 5 294 257

## Description

La présente invention concerne une traverse inférieure de baie perfectionnée pour protéger les occupants du véhicule, en particulier du véhicule automobile, en cas de choc frontal. Elle concerne également un véhicule, notamment automobile, qui comporte une telle traverse inférieure de baie perfectionnée.

D'une manière générale, la caisse d'un véhicule automobile comporte, d'avant en arrière, un compartiment moteur qui est fermé par un capot et qui est séparé de l'habitacle du véhicule par un tablier dont une partie supérieure comporte une traverse inférieure de baie. La traverse inférieure de baie est destinée à supporter une partie inférieure d'un pare-brise. Habituellement, cette traverse, qui est une pièce de tôle, ne participe pas à la prestation en cas de choc frontal du véhicule.

La traverse inférieure de baie est liée rigidement à l'ensemble de pied avant du véhicule en partie latérale par des points de soudure électrique (PSE). Cette liaison est susceptible de se « déboutonner » lors d'un choc frontal, ce qui crée un risque d'intrusion de la structure avant à l'intérieur de l'habitacle.

On a déjà cherché à limiter l'intrusion dans l'habitacle d'un véhicule sous l'effet d'un choc frontal violent et à éviter, de plus, les déformations latérales entre les pieds avant et les pieds centraux.

Ainsi, à titre d'exemple, le document FR 2 821 310 décrit une structure pour châssis de véhicule automobile comprenant des moyens de compensation contre les chocs provoqués lors d'un accident, au moins deux longerons à déformation programmée en partie avant du véhicule, au moins un pied avant et un pied milieu de chaque côté sensiblement dans la même partie avant délimitant l'espace vital des personnes à l'avant du véhicule et un groupe motopropulseur. Selon cette structure connue de l'art antérieur, les moyens de compensation comportent une traverse d'auvent solidarisée sensiblement perpendiculairement entre deux desdits longerons.

Le document EP 1 184 262 A décrit, par ailleurs, un traverse inférieure de baie de véhicule, notamment de véhicule automobile, cette traverse étant telle qu'elle comporte, dans l'une et l'autre de ses parties latérales proches des pieds avants, une zone de forme travaillée susceptible de se tendre selon la direction longitudinale de la traverse en cas de choc frontal sur le véhicule, de façon à constituer une zone dite « zone fusible » qui permet à la traverse inférieure de baie d'accompagner la rotation de l'ensemble de pied avant afin d'éviter le déboutonnage entre ladite traverse et l'ensemble de pied avant.

Le but de la présente invention est de fournir une nouvelle traverse inférieure de baie, perfectionnée, qui limite les intrusions dans l'habitacle afin de protéger les occupants du véhicule en cas de choc frontal.

Un autre but de la présente invention est de réaliser une telle nouvelle traverse inférieure de baie qui, du fait de sa conception intégrée dès l'étude de l'outil d'emboutissage, n'engendre sensiblement pas de surcoût par rapport aux traverses inférieures de baie de l'art antérieur.

Enfin, c'est également un but de la présente invention de fournir un véhicule, notamment un véhicule automobile, qui soit équipé d'une telle nouvelle traverse inférieure de baie, de façon à protéger ses occupants en cas de choc frontal violent.

Pour parvenir à ces buts, la présente invention a pour objet une nouvelle traverse inférieure de baie de véhicule telle que décrite par la revendication 1.

Selon le mode préféré de réalisation de l'invention, lesdites zones fusibles sont obtenues par emboutissage au moment du formage par emboutissage de ladite traverse.

De préférence, les zones fusibles sont situées sur la partie avant de ladite traverse, de préférence adjacentes au bord avant de la traverse.

De préférence également, les zones fusibles sont situées adjacentes à l'un et l'autre bord latéral de la traverse.

De préférence également, la partie sensiblement arrondie de chaque zone fusible s'inscrit sensiblement dans un pourtour sensiblement circulaire ou ovale.

L'invention a également pour objet un véhicule, en particulier un véhicule automobile, qui comporte une traverse inférieure de baie conforme à celle décrite ci-dessus dans ses grandes lignes.

Ce véhicule peut être un véhicule automobile avec fenestron, qui comporte des pieds avant dits pied avant « bi-montants », ou bien un véhicule à pieds avant classiques.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est un schéma montrant la zone du véhicule concernée par la présente invention,
- la figure 2 représente, en vue perspective et schématique, une partie de traverse inférieure de baie selon la présente invention dans son environnement de structure de caisse avant,
- les figures 3A à 3D sont des schémas montrant la structure de la liaison entre une traverse inférieure de baie classique, connue de l'art antérieur, et l'ensemble de pied avant un choc frontal (figures 4A et 4B) et après un choc frontal (figures 4C et 4D), et
- la figure 4 est une vue de dessus d'une traverse inférieure de baie, selon la présente invention,
- la figure 5 est une vue agrandie de la partie latérale de la traverse de la figure 4, montrant la zone travaillée selon la présente invention, et
- les figures 6A à 6D sont des schémas montrant la structure de la liaison entre une traverse inférieure de baie selon la présente invention et l'ensemble de pied avant un choc frontal (figures 6A et 6B) et après un choc frontal (figures 6C et 6D).

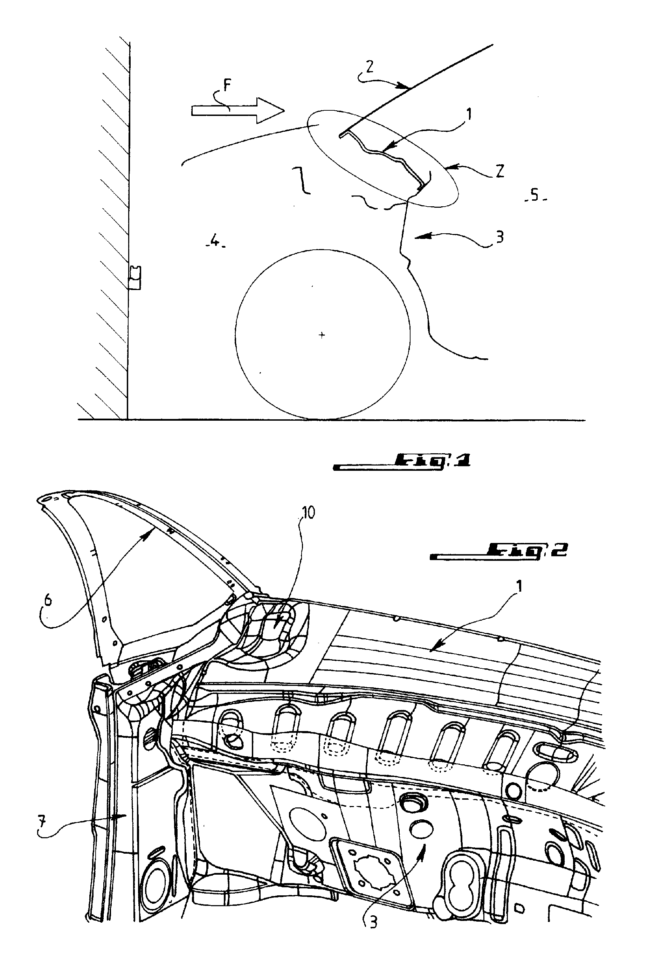

En référence au dessin de la figure 1, la présente invention concerne la traverse inférieure de baie, désignée aussi traverse inférieure de baie de pare-brise, de référence générale 1, destinée à supporter une partie inférieure d'un pare-brise 2. Avec le tablier 3, la traverse 1 sépare le compartiment moteur 4 de l'habitacle 5. La zone concernée par la présente invention est, par conséquent, la zone désignée Z sur la figure 1, qui est la zone incluant la traverse 1. La présente invention s'intègre dans le dispositif de déformation programmée de la tôlerie dans le cadre de la protection des occupants du véhicule lors d'un choc frontal illustré schématiquement par le vecteur F.

De manière classique, la traverse inférieure de baie 1 est une pièce en tôle, réalisée par emboutissage, qui ne participe pas à la prestation en choc frontal, c'est-à-dire qu'elle ne contribue pas aux résultats de protection en cas d'accident, mesurés par exemple par les scores de crash-tests Euro NCAP (Acronyme de « European New Car Assessment Program », organisme international ayant pour fonction de tester la sécurité passive des véhicules, notamment automobiles).

Comme montré sur la figure 2 représentant une partie latérale avant de carrosserie d'un véhicule automobile à fenestron 6, la traverse inférieure de baie est liée à l'ensemble de pied avant, de référence 7, et cette liaison est une liaison par des points de soudure électriques (PSE) non représentés, susceptible de se « déboutonner » lors d'un choc frontal sur le véhicule, ce qui peut causer une intrusion de la structure avant de la caisse automobile à l'intérieur de l'habitacle.

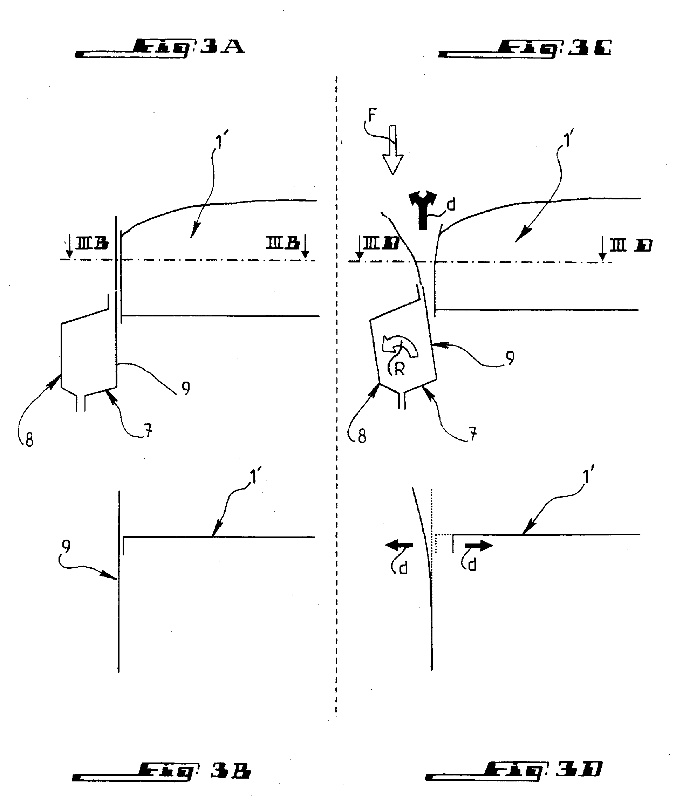

Les schémas des figures 3A à 3D illustrent le comportement en cas de choc frontal de cette liaison entre une traverse inférieure de baie classique, connue de l'art antérieur, et l'ensemble de pied avant. Avant tout choc, la traverse de baie inférieure 1' selon l'art antérieur est reliée, par son extrémité gauche représentée à titre d'exemple sur la figure 3A, à l'ensemble de pied avant gauche 7 comprenant le pied avant gauche lui-même 8 et la doublure d'aile avant gauche 9. La figure 3B est une vue en coupe, selon la ligne IIIB-IIIB de la figure 3A, de la liaison de la figure 3A. Cette figure 3B montre la liaison parfaitement orthogonale entre la traverse inférieure de baie 1' et l'ensemble de pied avant 7, notamment la doublure d'aile 9.

En cas de choc frontal, en particulier de choc frontal violent, symboliquement représenté par le vecteur F sur la figure 3C, les efforts transmis à l'ensemble de pied avant 7 provoquent une rotation (flèche R de la figure 3C) de cet ensemble et une rupture, désignée aussi « déboutonnage » des points de soudure électrique entre la doublure d'aile 9 et la traverse 1, celle-ci se désolidarisant de celle-là comme symboliquement représenté par les flèches « d » des figures 3C et 3D.

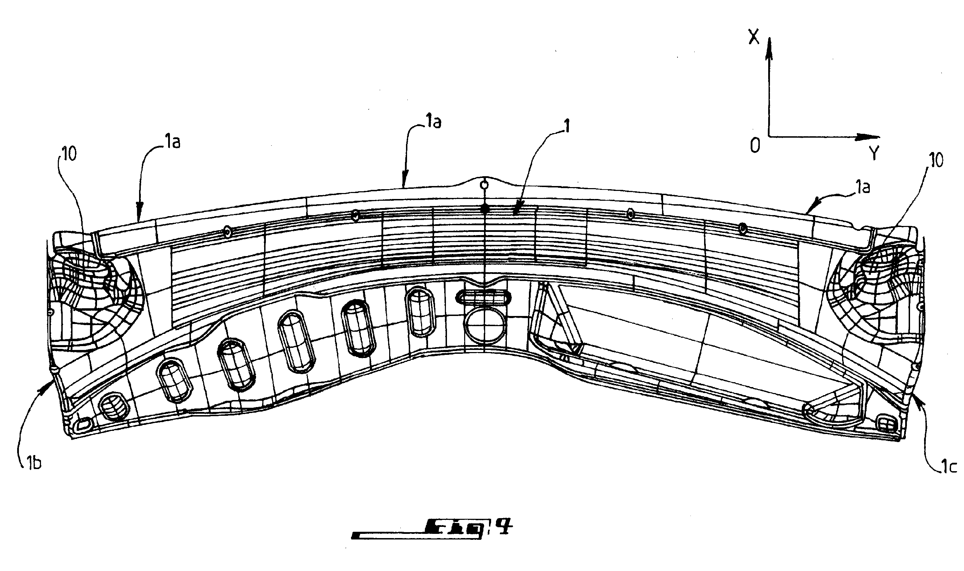

Pour éviter le « déboutonnage » des PSE et limiter la rotation de l'ensemble de pied avant 7, la traverse inférieure de baie 1 selon la présente invention comporte, en partie latérale, à droite comme à gauche, une zone de forme travaillée, référencée 10 sur le dessin des figures 2 et 4, susceptible de se tendre selon la direction longitudinale de la traverse en cas de choc frontal sur le véhicule, de façon à constituer une zone dite « zone fusible » qui permet à la traverse 1 d'accompagner la rotation de l'ensemble de pied avant 7 afin d'éviter le déboutonnage entre ladite traverse 1 et l'ensemble de pied avant 7.

La direction longitudinale de la traverse 1 est la direction en Y du véhicule (figure 4).

Les deux zones fusibles 10 sont situées à l'une et l'autre partie latérale de la traverse 1, comme cela est montré sur la figure 4.

Les deux zones fusibles 10 sont obtenues par emboutissage au cours de l'opération de formage par emboutissage de la traverse 1.

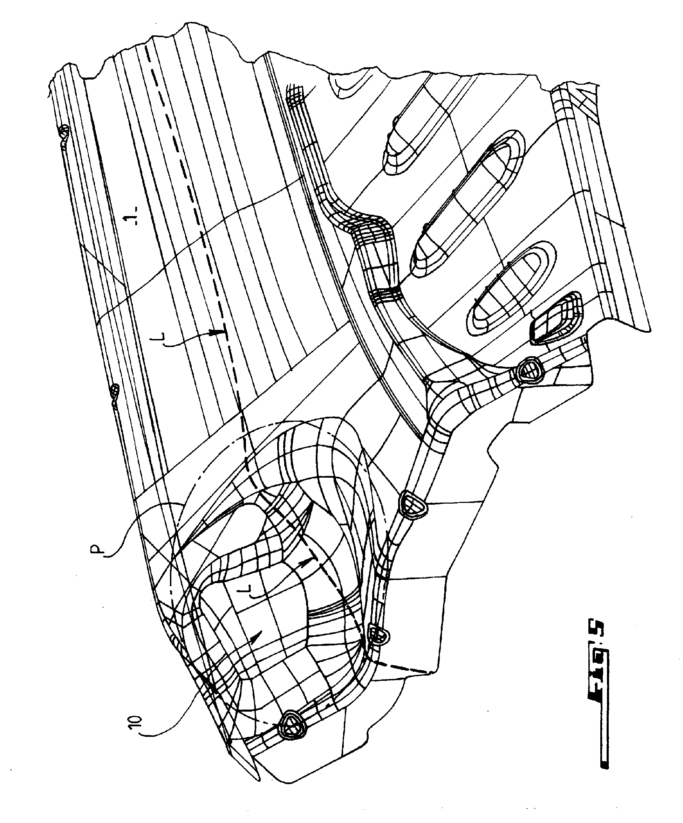

La section de chaque zone fusible 10 selon la direction longitudinale (en Y) de la traverse présente essentiellement une partie sensiblement arrondie vers l'intérieur du compartiment moteur du véhicule, comme mieux représenté par la ligne L sur la figure 5 qui est vue agrandie d'une zone fusible 10.

Ainsi, de façon plus générale, chaque zone fusible 10 se présente principalement sous une forme arrondie en creux, à concavité dirigée vers le compartiment moteur, telle une forme de secteur sensiblement sphérique.

Selon la direction en X du véhicule, les zones fusibles 10 sont situées sur la partie avant de la traverse 1, et plus précisément contre le bord avant 1a de ladite traverse 1 (figure 4). Selon la direction en Y du véhicule, elles sont situées contre les bords latéraux 1b, 1c, de la traverse 1, respectivement.

La partie sensiblement arrondie de chaque zone fusible 10 s'inscrit sensiblement dans un pourtour P sensiblement circulaire ou ovale, comme on peut le voir sur le dessin de la figure 5.

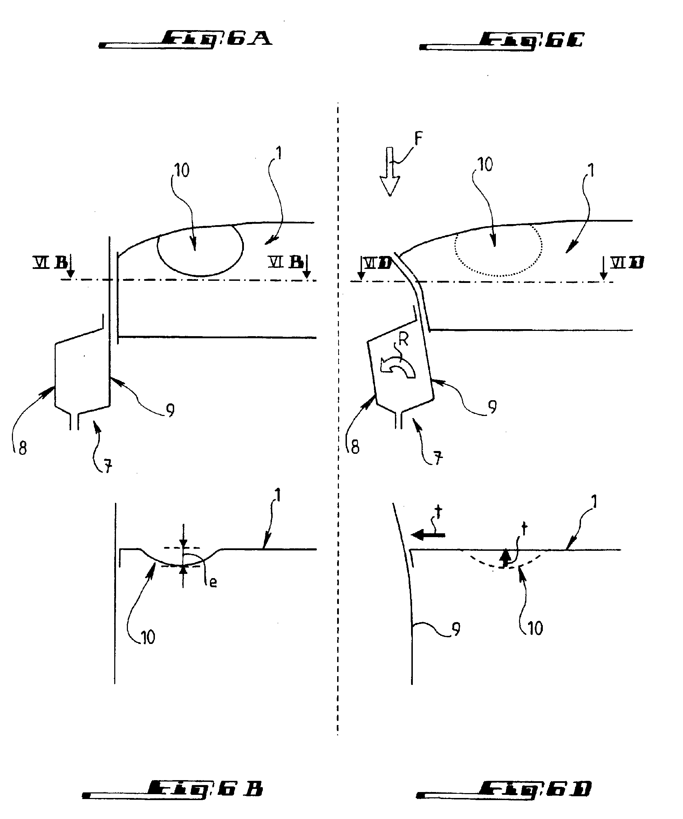

En référence aux figures 6A à 6D, le fonctionnement des zones fusibles 10 est décrit ci-après.

Les figures 6A et 6B représentent très schématiquement, en vue dessus et en coupe selon la ligne VIB-VIB de la figure 6A, respectivement, une traverse inférieure de baie 1 pourvue d'une zone fusible 10 selon la présente invention. La référence « e » désigne la profondeur en creux de la zone 10, qui résulte du travail d'emboutissage selon la présente invention.

En cas de choc frontal, illustré par la flèche F de la figure 6C, grâce à la forme spécifique de la zone 10 dessinée sur la traverse, la partie essentiellement arrondie de la zone 10 se tend sous l'action des efforts transmis par le choc (flèches « t » de la figure 6D). Cette tension se traduit par une réduction, voir une élimination de la distance « e », et cette tension de la zone fusible 10 permet d'accompagner la déformation de la structure latérale avant, en particulier la rotation R de l'ensemble de pied avant 7 (figure 6C) et d'éviter le déboutonnage des points de soudure électrique de la liaison entre l'ensemble de pied avant 7 et la traverse inférieure de baie 1 selon l'invention. Ainsi, la forme spécifique de la zone 10 permet la déformation de la partie latérale de la traverse 1 et de l'avant de l'ensemble de pied avant 7 dans l'axe du choc, en limitant la rotation de l'ensemble de pied avant, par conséquent en limitant les risques d'intrusion de la structure avant dans l'habitacle du véhicule.

La présente invention présente de nombreux avantages, parmi lesquels les avantages suivants :
- elle permet une amélioration de la prestation en choc frontal en limitant les risques d'intrusion vers l'habitacle du véhicule, et par conséquent en améliorant considérablement la protection des occupants du véhicule,
- elle constitue une solution technique très économique, parce qu'elle présente un surcoût nul par rapport aux solutions antérieures, la forme nouvelle de la traverse de la présente invention étant intégrée dès la conception de l'outil d'emboutissage de la traverse.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention définie par les revendications.

## Revendications

1. Traverse inférieure de baie (1) de véhicule, notamment de véhicule automobile, **caractérisée en ce qu'**elle comporte, dans l'une et l'autre de ses parties latérales proches des pieds avant, une zone (10) de forme travaillée dont la section selon la direction longitudinale (OY) de la traverse (1) présente essentiellement une partie sensiblement arrondie vers l'intérieur du compartiment moteur du véhicule, susceptible de se tendre selon la direction longitudinale (OY) de la traverse (1) en cas de choc frontal sur le véhicule, de façon à constituer une zone dite « zone fusible » qui permet à la traverse inférieure de baie (1) d'accompagner la rotation de l'ensemble de pied avant (7) afin d'éviter le déboutonnage entre ladite traverse (1) et l'ensemble de pied avant (7).

2. Traverse inférieure de baie selon la revendication 1, **caractérisée en ce que** lesdites zones fusibles (10) sont obtenues par emboutissage au moment du formage par emboutissage de ladite traverse (1).

3. Traverse inférieure de baie selon l'une quelconque des revendications 1 et 2, **caractérisée en ce que** les zones fusibles (10) sont situées sur la partie avant de ladite traverse (1).

4. Traverse inférieure de baie selon la revendication 3, **caractérisée en ce que** les zones fusibles (10) sont situées contre le bord avant (1a) de ladite traverse (1).

5. Traverse inférieure de baie selon l'une quelconque des revendications 1 à 4, **caractérisée en ce que** les zones fusibles (10) sont situées adjacentes à l'un et l'autre bord latéral (1b, 1c) de la traverse (1).

6. Traverse inférieure de baie selon l'une quelconque des revendications 1 à 5, **caractérisée en ce que** la partie sensiblement arrondie de chaque zone fusible (10) s'inscrit sensiblement dans un pourtour (P) sensiblement circulaire ou ovale.

7. Véhicule, en particulier véhicule automobile, **caractérisé en ce qu'**il comporte une traverse inférieure de baie (1) conforme à l'une quelconque des revendications 1 à 6.

## Patentansprüche

1. Unterer Windschutzscheibenquerträger (1) für Fahrzeug, insbesondere Kraftfahrzeug, **dadurch gekennzeichnet, dass** er in dem einen und dem anderen seiner seitlichen Teile in der Nähe der vorderen Füße eine Zone (10) mit ausgearbeiteter Form aufweist, deren Querschnitt entlang der Längsrichtung (OY) des Querträgers (1) im Wesentlichen einen Teil aufweist, der im Wesentlichen zu dem Inneren des Motorraums gerundet ist, der sich entlang der Längsrichtung (OY) des Querträgers (1) bei einem Frontalaufprall auf dem Fahrzeug derart strecken kann, dass er eine so genannte "Sicherungszone" bildet, die es dem unteren Windschutzscheibenquerträger (1) erlaubt, die Drehung der Einheit des vorderen Fußes (7) zu begleiten, um das Lösen zwischen dem Querträger (1) und der vorderen Fußeinheit (7) zu vermeiden.

2. Unterer Windschutzscheibenquerträger nach Anspruch 1, **dadurch gekennzeichnet, dass** die Sicherungszonen (10) durch Stanzen im Augenblick des Formens durch Stanzen des Querträgers (1) erzielt werden.

3. Unterer Windschutzscheibenquerträger nach einem der Ansprüche 1 und 2, **dadurch gekennzeichnet dass** die Sicherungszonen (10) auf dem vorderen Teil des Querträgers (1) liegen.

4. Unterer Windschutzscheibenquerträger nach Anspruch 3, **dadurch gekennzeichnet, dass** die Sicherungszonen (10) gegen vorderen Rand (1a) des Querträgers (1) liegen.

5. Unterer Windschutzscheibenquerträger nach einem der Ansprüche 1 bis 4, **dadurch gekennzeichnet, dass** die Sicherungszonen (10) neben dem einen und dem anderen Seitenrand (1b, 1c) des Querträgers (1) liegen.

6. Unterer Windschutzscheibenquerträger nach einem der Ansprüche 1 bis 5, **dadurch gekennzeichnet, dass** der im Wesentlichen gerundete Teil jeder Sicherungszone (10) im Wesentlichen in einen Umkreis (P) fällt, der im Wesentlichen kreisförmig oder oval ist.

7. Fahrzeug, insbesondere Kraftfahrzeug, **dadurch gekennzeichnet, dass** es einen unteren Windschutzscheibenquerträger (1) nach einem der Ansprüche 1 bis 6 aufweist.

## Claims

1. A lower windscreen transverse member (1) of a vehicle, in particular of a motor vehicle, **characterized in that** it comprises, in the one and the other of its lateral parts close to the front pillars, a zone (10) of worked shape, the section of which along the longitudinal direction (OY) of the transverse member (1) has essentially a part which is substantially rounded towards the interior of the engine compartment of the vehicle, able to tighten along the longitudinal direction (OY) of the transverse member (1) in the case of a frontal impact on the vehicle, so as to constitute a zone designated a "fusible zone" which permits the lower windscreen transverse member (1) to accompany the rotation of the front pillar assembly (7) so as to prevent peeling between the said transverse member (1) and the front pillar assembly (7).

2. The lower windscreen transverse member according to Claim 1, **characterized in that** the said fusible zones (10) are obtained by stamping at the moment of forming by stamping of the said transverse member (1).

3. The lower windscreen transverse member according to any one of Claims 1 and 2, **characterized in that** the fusible zones (10) are situated on the front part of the said transverse member (1).

4. The lower windscreen transverse member according to Claim 3, **characterized in that** the fusible zones (10) are situated against the front edge (1a) the said transverse member (1).

5. The lower windscreen transverse member according to any one of Claims 1 to 4, **characterized in that** the fusible zones (10) are situated adjacent to the one and the other lateral edge (1b, 1c) of the transverse member (1).

6. The lower windscreen transverse member according to any one of Claims 1 to 5, **characterized in that** the substantially rounded part of each fusible zone (10) is inscribed substantially in a substantially circular or oval circumference (P).

7. A vehicle, in particular a motor vehicle, **characterized in that** it comprises a lower windscreen transverse member (1) according to any one of Claims 1 to 6.
